**Europäisches Patentamt**

**European Patent Office**

**Office européen des brevets**

(19)

(11) Veröffentlichungsnummer : **0 183 062**
**B1**

(12) **EUROPÄISCHE PATENTSCHRIFT**

(45) Veröffentlichungstag der Patentschrift :
01.02.89

(21) Anmeldenummer : 85113587.1

(22) Anmeldetag : 25.10.85

(51) Int. Cl.⁴ : **G 01 N 29/02, G 01 H   5/00**

(54) **Verfahren und Vorrichtung zur Untersuchung des Füllgases von Isolierglasscheiben.**

(30) Priorität : **27.10.84 DE 3439405**

(43) Veröffentlichungstag der Anmeldung :
**04.06.86 Patentblatt 86/23**

(45) Bekanntmachung des Hinweises auf die Patenterteilung : **01.02.89 Patentblatt 89/05**

(84) Benannte Vertragsstaaten :
**AT BE CH DE FR GB LI LU NL SE**

(56) Entgegenhaltungen :
CH–A–   469 982
DE–A– 2 211 611
DE–A– 3 009 566
DE–C– 3 105 740
GB–A– 1 044 371
US–A– 3 120 750
TECHNISCHES MESSEN, Band 50, Nr. 2, Februar 1983, Seiten 43-48, München; E.N. HARAN "Gasdichtemessung mittels Akustischer Methode"

(73) Patentinhaber : **FLACHGLAS AKTIENGESELLSCHAFT**
**Otto-Seeling-Promenade 10-14**
**D-8510 Fürth (DE)** .

(72) Erfinder : **Jäger, Wolfgang, Dipl.-Ing.**
**Am Hang 28**
**D-5810 Witten (DE)**
Erfinder : **Reichmann, Peter, Dipl.-Phys.**
**Klemensstrasse 8**
**D-4100 Duisburg 1 (DE)**
Erfinder : **Obbarius, Hans-Ulrich, Dr. Dipl.-Phys.**
**Küppersbuschstrasse 80**
**D-4650 Gelsenkirchen (DE)**

(74) Vertreter : **Goddar, Heinz J., Dr. et al**
**FORRESTER & BOEHMERT Widenmayerstrasse 4/I**
**D-8000 München 22 (DE)**

**Beschreibung**

Die Erfindung betrifft ein Verfahren zum Untersuchen des Füllgases von mindestens zwei Einzelscheiben und einen zwischen diesen gebildeten gasgefüllten Scheibenzwischenraum aufweisenden Isolierglasscheiben oder dergleichen, bei dem die Konzentration wenigstens eines Schwergases oder dergleichen im Scheibenzwischenraum durch Messung und Auswertung der Fortpflanzungsgeschwindigkeit einer auf eine der Einzelscheiben aufgeprägten Signalgröße im Scheibenzwischenraum ermittelt und hieraus die gesuchte Gaskonzentration errechnet wird, sowie eine Vorrichtung zum Untersuchen des Füllgases von mindestens zwei Einzelscheiben und einen zwischen diesen gebildeten gasgefüllten Scheibenzwischenraum aufweisenden Isolierglasscheiben oder dergleichen, mit einem auf eine der Einzelscheiben eine Signalgröße aufprägenden Sender, einem die Messung der Fortpflanzungsgeschwindigkeit der Signalgröße im Scheibenzwischenraum ermöglichenden Empfänger und einem Rechner zur Ermittlung der Gaskonzentration aus der Dicke des Scheibenzwischenraumes und der ermittelten Fortpflanzungsgeschwindigkeit.

Gasgefüllte Isolierglasscheiben, bei denen der Scheibenzwischenraum vorzugsweise zur Verbesserung der Isoliereigenschaften der Scheiben ein Schwergas, wie beispielsweise $SF_6$, aufweist, müssen insbesondere in der Endkontrolle auf die Füllgasbeschaffenheit, nämlich auf die Konzentration des für die Qualität der Scheibe entscheidenden Füllgases im Scheibenzwischenraum, überprüft werden, wobei auch bereits eingebaute Scheiben gegebenenfalls ambulant auf die betreffende Gaskonzentration untersuchbar sein sollen.

Aus der DE-PS 31 05 740 sind ein Verfahren sowie eine Vorrichtung der eingangs genannten Art bekannt, bei denen als Signalgröße ein Wärmepuls auf die betreffende. Einzelscheibe aufgegeben und dessen Laufzeit im Füllgas gemessen wird, wobei aus der entsprechenden Laufzeit letztlich nach bekannten Formeln die gesuchte Gaskonzentration ermittelt werden kann. Das bekannte Verfahren sowie die bekannte Vorrichtung erfordern einen beträchtlichen apparativen Aufwand, insbesondere durch Einbau von Sensoren etc. in den Scheibenzwischenraum der zu prüfenden Isolierglasscheiben. Auch läßt die Genauigkeit des bekannten Verfahrens Wünsche offen.

Aus der DE-OS 30 09 566 sind weiterhin ein Verfahren sowie eine Vorrichtung zur Messung des $CO_2$-Gehaltes von Gasen bekannt, wobei so vorgegangen wird, daß in einer das zu messende Gas enthaltenden Meßstrecke die Schallgeschwindigkeit ermittelt und hieraus die Gaskonzentration bestimmt wird, wobei hierzu in der Meßstrecke durch beispielsweise Frequenzänderung eine stehende Welle erzeugt und dann die Schallgeschwindigkeit aus der Meßstreckenlänge und der Frequenz ermittelt wird. Eine Verwendung dieses Verfahrens bzw. dieser Vorrichtung zur Messung der Gaskonzentration im Scheibenzwischenraum von Isolierglasscheiben ist einmal deshalb nicht möglich, weil es hierzu erforderlich wäre, aus dem Scheibenzwischenraum Füllgas in die Meßstrecke einzubringen, zum anderen aber deshalb nicht, weil sich überraschenderweise bei der dem Fachmann möglicherweise als plausible Abwandlung dieses Standes der Technik anbietenden Verwendung des Scheibenzwischenraumes selbst als Meßkammer im Scheibenzwischenraum nicht eine stehende Welle senkrecht zur Scheibenoberfläche ausbildet, mit Schalldruckknoten vor der mit Schall beaufschlagten Scheibe und Schalldruckbauch vor der anderen Scheibe, sondern sich durch Biegeschwingungen der Einzelscheiben der Isolierglasscheibe im Sinne der Überlagerung zweier schwingender Platten mit der Luftschallschwingung im Scheibenzwischenraum eine Schwebung im weiteren Sinne und hieraus resultierend mehrere Resonanz-Wellenlängen bzw. Einzel-Resonanzfrequenzen ergeben, die mittels der bekannten Vorgehensweise nicht zur Ermmittlung der Gaskonzentration auswertbar sind.

Der Erfindung liegt daher die Aufgabe zugrunde, ein Verfahren sowie eine Vorrichtung der gattungsgemäßen Art zu schaffen, welche mit geringem apparativem Aufwand in hoher Anzeigegenauigkeit sowohl die Endkontrolle von neuproduzierten gasgefüllten Isolierglasscheiben als auch gegebenenfalls ambulante Messungen an eingebauten Scheiben gestattet, ohne daß Eingriffe in den Scheibenzwischenraum notwendig wären.

Erfindungsgemäß wird diese Aufgabe bei einem Verfahren der eingangs genannten Art dadurch gelöst, daß als Signalgröße ein Schallsignal verwendet wird ; und daß die Schallgeschwindigkeit aus der Dicke des Scheibenzwischenraumes und der mittleren Resonanzfrequenz im Scheibenzwischenraum beim Durchstimmen eines Frequenzintervalls sich bildender stehender Wellen ermittelt wird.

Dabei kann so vorgegangen werden, daß ein Frequenzintervall von ca. $F_0 = 2,5$ kHz bis ca. $F_{max} = 26$ kHz verwendet wird, wobei das Durchstimmen mit ca. 800 Hz/sec. erfolgt.

Erfindungsgemäß kann auch so vorgegangen werden, daß das Aufbringen des Schallsignals und die Schwingungsaufnahme an ein und derselben Einzelscheibe erfolgt.

Besonders bevorzugt ist eine Ausführungsform des erfindungsgemäßen Verfahrens, welche dadurch gekennzeichnet ist, daß mittels eines Schwingungsaufnehmers die Druckamplituden der Schwingungen der an einer mit Abstand vom Schwingungsaufnehmer befindlichen Stelle mit dem Schallsignal beaufschlagten Einzelscheibe über der durchgestimmten Frequenz ermittelt werden ; daß die zu messenden Resonanzfrequenzen von den Biegeeigenfrequenzen durch Auswertung der Anstiegszeit des Pegels über der durchgestimmten Erregerfrequenz sowie der Pegelhöhe diskriminiert werden ; und daß nach Ermittlung der Laufzeit für die Durchstimmung die Einzel-Resonanzfrequenzen ermittelt und hieraus durch Mittelwertbildung über die Frequenz eine mittlere Resonanzfrequenz zur Errechnung der Schallgeschwindigkeit bestimmt wird.

Dabei kann vorgesehen sein, daß zur Errechnung der Schallgeschwindigkeit in das durchgestimmte Frequenzintervall fallende Oberschwingungen mitberücksichtigt werden.

Auch kann erfindungsgemäß vorgesehen sein, daß Störschwingungen sowie Biegeeigenfrequenzen der Einzelscheiben weggefiltert werden.

Die Erfindung sieht weiterhin ggf. vor, daß die Dicke des Scheibenzwischenraumes in der Nähe der Eindringstelle des Schallsignales gemessen und der so erhaltene Meßwert bei der Ermittlung der Schallgeschwindigkeit verwendet wird.

Weiterhin schlägt die Erfindung vor, daß die Dicke der Einzelscheiben in der Nähe der Eindringstelle des Schallsignales gemessen wird.

Das erfindungsgemäße Verfahren kann weiterhin auch dadurch gekennzeichnet sein, daß anhand der gemessenen Werte für die Dicke des Scheibenzwischenraumes sowie der Einzelscheiben unter Heranziehung einer abgespeicherten Soll-Schwergas-Konzentration ein Ist/Sollwertvergleich bezüglich der Gaskonzentration durchgeführt wird.

Die erfindungsgemäß vorgeschlagene Vorrichtung der eingangs genannten Art zeichnet sich zur Lösung der zugrundeliegenden Aufgabe dadurch aus, daß der Sender ein Schallsender ist ; daß der Empfänger ein mit Abstand von dem Schallsender angreifender Schwingungsaufnehmer ist ; daß der Schallsender zum Durchstimmen eines Frequenzintervalls zur Erzeugung stehender Wellen im Scheibenzwischenraum eingerichtet ist ; und daß ein Rechner zur Ermittlung einer mittleren Resonanzfrequenz aus den gemessenen Einzel-Resonanzfrequenzen vorgesehen ist.

Dabei kann vorgesehen sein, daß der Schallsender und der Schwingungsaufnehmer an derselben Einzelscheibe angreifen.

Auch kann vorgesehen sein, daß der Schallsender ein Piezo-Schallsender ist.

Auch kann dabei so vorgegangen werden, daß das durchstimmbare Frequenzintervall von ca. $F_0 = 2,5$ kHz bis ca. $F_{max} = 26$ kHz reicht und mit ca. 800 Hz/sec. durchstimmbar ist.

Die Erfindung sieht weiterhin ggf. vor, daß der Schallsender über einen Rampen- und einen Sinusgenerator mit der Erregerfrequenz beaufschlagbar ist.

Eine weitere Ausführungsform der Erfindung sieht vor, daß dem Schwingungsaufnehmer mindestens ein Filter zur Eliminierung von Störfrequenzen nachgeschaltet ist.

Dabei kann vorgesehen sein, daß dem Schwingungsaufnehmer ein Hoch- sowie ein Tiefpaß nachgeschaltet sind.

Weiterhin schlägt die Erfindung ggf. vor, daß zwischen den Hochpaß und den Tiefpaß ein Logarithmierer eingeschaltet ist.

Auch kann erfindungsgemäß vorgesehen sein, daß dem Filter bzw. den Filtern ein Anstiegszeitdiskriminator nachgeschaltet ist.

Infolge des geringen apparativen Aufwandes, insbesondere ohne die Notwendigkeit von Einbauten in der Isolierglasscheibe, eignen sich die erfindungsgemäße Vorrichtung bzw. das Verfahren nach der Erfindung sowohl zur Endkontrolle neuproduzierter gasgefüllter Isolierglasscheiben, aber auch für ambulante Messungen an eingebauten Scheiben.

Weitere Merkmale und Vorteile der Erfindung ergeben sich aus den Ansprüchen und aus der nachfolgenden Beschreibung, in der ein Ausführungsbeispiel anhand der schematischen Zeichnung im einzelnen erläutert ist.

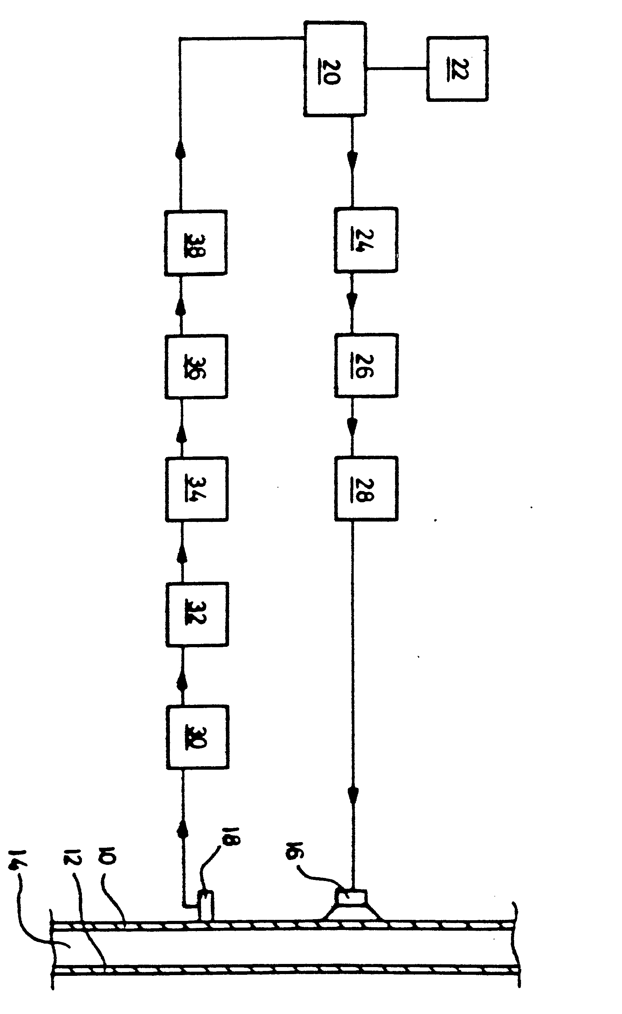

Die aus einer einzigen Figur bestehende Zeichnung zeigt dabei ein Funktionsschema eines Ausführungsbeispieles der Vorrichtung nach der Erfindung.

Wie die Zeichnung erkennen läßt, greifen an einer ersten Einzelscheibe 10 einer Isolierglasscheibe, die eine weitere Einzelscheibe 12 aufweist, wobei zwischen den beiden Einzelscheiben 10, 12, beispielsweise Silikatglasscheiben, ein gasgefüllter Scheibenzwischenraum 14 angeordnet ist, ein Piezo-Schallsender 16 sowie ein Schwingungsaufnehmer 18 an. Dem Schallsender 16 sind ein Rechner 20 mit Daten-Display 22, ein Rampengenerator 24, ein Sinusgenerator 26 sowie ein Endverstärker 28 vorgeschaltet, die es insgesamt ermöglichen, am Schallsender 16 einen Frequenzbereich 'von $F_0 = 2,5$ kHz bis $F_{max} = 26$ kHz mit 800 Hz/sec. durchzustimmen. Dem Schwingungsaufnehmer 18 sind ein Vorverstärker 30, ein Hochpaß 32 von 1 000 Hz, ein Logarithmierer 34, ein Tiefpaß 36 von 400 Hz sowie ein Anstiegszeitdiskriminator 38 nachgeschaltet.

Zur Ermittlung der Konzentration von — im vorliegenden Ausführungsbeispiel — $SF_6$ in der im übrigen zusätzlich zum Füllgas $SF_6$ den Scheibenzwischenraum 14 füllenden Luft zwischen $c = 0-100 \%$ $SF_6$, mit einer absoluten Genauigkeit von etwa $\pm 3 \%$ oder besser, wird wie folgt vorgegangen : über den Rechner 20 und die ihm nachgeordneten Komponenten 24, 26, 28 sowie den Schallsender 16 wird die Einzelscheibe 10 unter Durchstimmung des Frequenzintervalls von 2,5 kHz bis 26 kHz in 800 Hz/sec. mit der Erregerfrequenz beaufschlagt, wobei die Einzelscheiben 10 und 12 so zu Biegeschwingungen angeregt werden, daß sich stehende Wellen mit Schalldruckknoten jeweils an den Einzelscheiben 10 und 12 ausbilden, wodurch stehende Wellen mit den Wellenlängen $\lambda_n$ gebildet werden, die mit der Dicke des Scheibenzwischenraumes 14, SZR, nach der Formel

$$SZR = n/2 \ \lambda_n, \text{ mit } n = 1, 2, 3 \ldots$$

verknüpft sind. Vom Schwingungsaufnehmer 18 werden die Druckamplituden der Schwingungen der Einzelscheibe 10 über der durchgestimmten Frequenz detektiert, wobei es beim Durchstimmen des Frequenzintervalls durch Biegeschwingungen der Einzelscheiben 10 und 12 im Sinne der Überlagerung der Schwingungen von zwei schwingenden Platten mit der Luftschallschwingung im Scheibenzwischenraum 14 zu einer « Schwebung » im weiteren Sinne und somit zur Erzeugung mehrerer Einzel-Resonanzfrequenzen kommt. Zwischen den gesuchten Resonanz-Frequenzen und den Frequenzen der Biegeeigenschwingungen der Einzelscheiben 10, 12 wird unterschieden, indem wie folgt diskriminiert wird : Störschwingungen unterhalb der erwarteten mittleren Resonanzfrequenz werden mittels des Hochpasses 32 weggefiltert ; der Logarithmierer 34 erzeugt sog. Pegel und begrenzt hierdurch die großen Schwingungsamplituden, ohne die kleinen Amplituden abzuschneiden ; zum Ausfiltern der Erregerfrequenz von Störspitzen und Biegeeigenfrequenzen der Einzelscheiben 10, 12 dient der Tiefpaß 36, während der Anstiegszeitdiskriminator 38 eine Diskriminierung hinsichtlich der Anstiegszeit des Pegels über der durchgestimmten Erregerfrequenz im Vergleich zu den Biegeschwingungen der Einzelscheiben 10, 12 ermöglicht. Zusätzlich wird nach der Pegelhöhe diskriminiert. Die durchgelassenen Pegel werden als « Marken » an den Rechner 20 gegeben. Mit Hilfe der Laufzeit für die Durchstimmung werden die Einzel-Resonanzfrequenzen ermittelt. Einzelne auftretende Störfrequenzen werden rechnerisch unterdrückt. Nach einer Mittelwertbildung über der Frequenz steht eine mittlere Resonanzfrequenz zur Berechnung der Schallgeschwindigkeit zur Verfügung, wobei natürlich die Dicke des Scheibenzwischenraumes 14, SZR dem Rechner 20 getrennt aufgegeben wurde. Aus der so ermittelten Schallgeschwindigkeit wird die Gaskonzentration von $SF_6$ in Luft bestimmt. Die entsprechende Anzeige erfolgt auf dem Display 22, beispielsweise einem Bildschirm.

Der Rechner 20 zur Steuerung des Meßablaufes und zur Auswertung ist ein handesüblicher Mikrocomputer, der natürlich zusätzlich Einrichtungen zum Erzeugen des Schallsignales für den Schallsender 16 sowie zur Verarbeitung der aufgenommenen Signale aufweist. Der Schallsender 16 kann im übrigen mittels Scheibensaugern von beispielsweise ca. $400 \times 80 \times 25$ mm³ auf die Einzelscheibe 10 aufgesetzt werden, ebenso wie der Schwingungsaufnehmer 18.

Die vorstehend beschriebene Vorrichtung bzw. das Verfahren nach der Erfindung eignen sich vorzugsweise zur Endkontrolle neuproduzierter, gasgefüllter Isolierglasscheiben, können aber grundsätzlich auch für ambulante Messungen an bereits eingebauten Scheiben verwendet werden, wobei natürlich in der Endkontrolle etc. auch ein sofortiger Vergleich mit einer abgespeicherten Soll-$SF_6$-/Luftkonzentration möglich ist.

Im übrigen ist es natürlich auch möglich, statt der erfindungsgemäß vorgesehenen Filter etc. einen Rechner mit geeigneter Software zu verwenden.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

Bezugszeichenliste
(List of reference numerals)

| Nr. | Bezeichnung |
|---|---|
| 1 | |
| 2 | |
| 3 | |
| 4 | |
| 5 | |
| 6 | |
| 7 | |
| 8 | |
| 9 | |
| 10 | Einzelscheibe |
| 11 | |
| 12 | Einzelscheibe |
| 13 | |
| 14 | Scheibenzwischenraum |
| 15 | |
| 16 | Schallsender |
| 17 | |
| 18 | Schwingungsaufnehmer |
| 19 | |
| 20 | Rechner |
| 21 | |
| 22 | Daten-Display |
| 23 | |
| 24 | Rampengenerator |
| 25 | |
| 26 | Sinusgenerator |
| 27 | |
| 28 | Endverstärker |
| 29 | |
| 30 | Vorverstärker |
| 31 | |
| 32 | Hochpaß |
| 33 | |
| 34 | Logarithmierer |
| 35 | |
| 36 | Tiefpaß |
| 37 | |
| 38 | Anstiegszeitdiskriminator |
| 39 | |
| 40 | |
| 41 | |
| 42 | |
| 43 | |
| 44 | |
| 45 | |
| 46 | |
| 47 | |
| 48 | |
| 49 | |
| 50 | |
| 51 | |
| 52 | |
| 53 | |
| 54 | |
| 55 | |
| 56 | |
| 57 | |

**Patentansprüche**

1. Verfahren zum Untersuchen des Füllgases von mindestens zwei Einzelscheiben und einen zwischen diesen gebildeten gasgefüllten Scheibenzwischenraum aufweisenden Isolierglasscheiben oder dergleichen, bei dem die Konzentration wenigstens eines Schwergases oder dergleichen im Scheibenzwischenraum durch Messung und Auswertung der Fortpflanzungsgeschwindigkeit einer auf eine der Einzelscheiben aufgeprägten Signalgröße im Scheibenzwischenraum ermittelt und hieraus die gesuchte Gaskonzentration errechnet wird, dadurch gekennzeichnet, daß als Signalgröße ein Schallsignal verwendet wird ; und daß die Schallgeschwindigkeit aus der Dicke des Scheibenzwischenraumes und der mittleren Resonanzfrequenz im Scheibenzwischenraum beim Durchstimmen eines Frequenzintervalls sich bildender stehender Wellen ermittelt wird.

2. Verfahren nach Anspruch 1, dadurch gekennzeichnet, daß ein Frequenzintervall von ca. $F_o = 2,5$ kHz bis ca. $F_{max} = 26$ kHz verwendet wird, wobei das Durchstimmen mit ca. 800 Hz/sec. erfolgt.

3. Verfahren nach einem der vorangehenden Ansprüche, dadurch gekennzeichnet, daß das Aufbringen des Schallsignals und die Schwingungsaufnahme an ein und derselben Einzelscheibe erfolgt.

4. Verfahren nach einem der vorangehenden Ansprüche, dadurch gekennzeichnet daß mittels eines Schwingungsaufnehmers die Druckamplituden der Schwingungen der an einer mit Abstand vom Schwingungsaufnehmer befindlichen Stelle mit dem Schallsignal beaufschlagten Einzelscheibe über der durchgestimmten Frequenz ermittelt werden ; daß die zu messenden Resonanzfrequenzen von den Biegeeigenfrequenzen durch Auswertung der Anstiegszeit des Pegels über der durchgestimmten Erregerfrequenz sowie der Pegelhöhe diskriminiert werden ; und daß nach Ermittlung der Laufzeit für die Durchstimmung die Einzel-Resonanzfrequenzen ermittelt und hieraus durch Mittelwertbildung über die Frequenz eine mittlere Resonanzfrequenz zur Errechnung der Schallgeschwindigkeit bestimmt wird.

5. Verfahren nach Anspruch 4, dadurch gekennzeichnet, daß zur Errechnung der Schallgeschwindigkeit in das durchgestimmte Frequenzintervall fallende Oberschwingungen mitberücksichtigt werden.

6. Verfahren nach Anspruch 4 oder 5, dadurch gekennzeichnet, daß Störschwingungen sowie Biegeeigenfrequenzen der Einzelscheiben weggefiltert werden.

7. Verfahren nach einem der vorangehenden Ansprüche, dadurch gekennzeichnet, daß die Dicke des Scheibenzwischenraumes in der Nähe der Eindringstelle des Schallsignales gemessen und der so erhaltene Meßwertbeider Ermittlung der Schallgeschwindigkeit verwendet wird.

8. Verfahren nach Anspruch 7, dadurch gekennzeichnet, daß die Dicke der Einzelscheiben in der Nähe der Eindringstelle des Schallsignales gemessen wird.

9. Verfahren nach Anspruch 8, dadurch gekennzeichnet, daß anhand der gemessenen Werte für die Dicke des Scheibenzwischenraumes sowie der Einzelscheiben unter Heranziehung einer abgespeicherten Soll-Schwergas-Konzentration ein Ist/Sollwertvergleich bezüglich der Gaskonzentration durchgeführt wird.

10. Vorrichtung zum Untersuchen des Füllgases von mindestens zwei Einzelscheiben und einen zwischen diesen gebildeten gasgefüllten Scheibenzwischenraum aufweisenden Isolierglasscheiben oder dergleichen, mit einem auf eine der Einzelscheiben eine Signalgröße aufprägenden Sender, einem die Messung der Fortpflanzungsgeschwindigkeit der Signalgröße im Scheibenzwischenraum ermöglichenden Empfänger und einem Rechner zur Ermittlung der Gaskonzentration aus der Dicke des Scheibenzwischenraumes und der ermittelten Fortpflanzungsgeschwindigkeit, insbesondere zur Durchführung des Verfahrens nach einem der vorangehenden Ansprüche, dadurch gekennzeichnet, daß der Sender ein Schallsender (16) ist ; daß der Empfänger ein mit Abstand von dem Schallsender (16) angreifender Schwingungsaufnehmer (18) ist ; daß der Schallsender (16) zum Durchstimmen eines Frequenzintervalles zur Erzeugung stehender Wellen im Scheibenzwischenraum (14) eingerichtet ist ; und daß ein Rechner (20) zur Ermittlung einer mittleren Resonanzfrequenz aus den gemessenen Einzel-Resonanzfrequenzen vorgesehen ist.

11. Vorrichtung nach Anspruch 10, dadurch gekennzeichnet, daß der Schallsender (16) und der Schwingungsaufnehmer (18) an derselben Einzelscheibe (10) angreifen.

12. Vorrichtung nach Anspruch 10 oder 11, dadurch gekennzeichnet, daß der Schallsender ein Piezo-Schallsender (16) ist.

13. Vorrichtung nach Anspruch 12, dadurch gekennzeichnet, daß das durchstimmbare Frequenzintervall von ca. $F_o = 2,5$ kHz bis ca. $F_{max} = 26$ kHz reicht und mit ca. 800 Hz/sec. durchstimmbar ist.

14. Vorrichtung nach einem der Ansprüche 10 bis 13, dadurch gekennzeichnet, daß der Schallsender (16) über einen Rampen- (24) und einen Sinusgenerator (26) mit der Erregerfrequenz beaufschlagbar ist.

15. Vorrichtung nach einem der Ansprüche 10 bis 14, dadurch gekennzeichnet, daß dem Schwingungsaufnehmer (18) mindestens ein Filter (32, 36) zur Eliminierung von Störfrequenzen nachgeschaltet ist.

16. Vorrichtung nach Anspruch 15, dadurch gekennzeichnet, daß dem Schwingungsaufnehmer (18) ein Hoch- (32) sowie ein Tiefpaß (36) nachgeschaltet sind.

17. Vorrichtung nach Anspruch 16, dadurch gekennzeichnet, daß zwischen den Hochpaß (32) und den Tiefpaß (36) ein Logarithmierer (34) eingeschaltet ist.

18. Vorrichtung nach einem der Ansprüche 15 bis 17, dadurch gekennzeichnet, daß dem Filter bzw. den Filtern (32, 36) ein Anstiegszeitdiskriminator nachgeschaltet ist.

**Claims**

1. A method of examining the filling gas of insulating glass panes or the like having at least two individual panes and a gas-filled space therebetween, the concentration of at least one dense gas or the like in such space being ascertained by measurement and evaluation of the speed of propagation in such space of a signal parameter impressed on one of the panes, the sought-for gas concentration being calculated from such measurement and evaluation, characterised in that the signal parameter is a sound signal and the sound speed is found from the thickness of the space and the average resonant frequency therein in tuning through a frequency interval of standing waves which are formed.

2. A method according to claim 1, characterised in that a frequency interval of approximately $F_o = 2.5$ kHz to approximately $F_{max} = 26$ kHz, tuning-through proceeding at approximately 800 Hz/sec.

3. A method according to claim 1 and/or 2, characterised in that the application of the sound signal and the oscillation reception proceed on the same individual pane.

4. A method according to any of the previous claims, characterised in that by means of an oscillation receiver the pressure amplitudes of the oscillations of the discrete pane, the same having the sound signal applied to it at a place at a distance from the oscillation receiver, are ascertained over the tuned-through frequency ; the resonant frequencies to be measured are discriminated from the natural flexural frequencies by evaluation of the growth time of the level over the tuned-through exciting frequency and of level height ; and after the transit time for tuning-through has been ascertained the discrete resonant frequencies are found and used to determine by averaging over the frequency an average resonant frequency to calculate the speed of the sound.

5. A method according to claim 4, characterised in that to calculate the speed of the sound harmonics which fall into the tuned-through frequency interval are also taken into consideration.

6. A method according to claim 4 or 5, characterised in that interfering oscillations and natural flexural frequencies of the discrete panes are removed by filtering.

7. A method according to any of the previous claims, characterised in that the thickness of the between-panes space near the place of penetration of the sound signal is measured and the resulting measured value is used in ascertaining the speed of the sound.

8. A method according to claim 7, characterised in that the thickness of the discrete panes is measured near the place of penetration of the sound signal.

9. A method according to claim 8, characterised in that an actual-value/set-value comparison for the gas concentration is carried out with reference to the measured values for the thickness of the between-panes space and of the discrete panes with the use of a stored concentration of set-value dense gas.

10. An apparatus for examining the filling gas of insulating glass panes or the like having at least two discrete panes and a gas-filled space therebetween, the apparatus comprising ; a transmitter impressing a signal parameter on one of the discrete panes ; a receiver for measuring the rate of propagation of the signal parameter in such space ; and a computer for discovering the gas concentration from the thickness of the space and from the ascertained speed of propagation, more particularly for performing the method according to any of the previous claims, characterised in that the transmitter is a sound transmitter (16) ; the receiver is an oscillation receiver (18) operative at a distance from the sound transmitter (16) ; the same is adapted to tune through a frequency range to produce standing waves in the between-panes space (14) ; and a computer (20) is provided to compute an average resonant frequency from the measured discrete resonant frequencies.

11. An apparatus according to claim 10, characterised in that the sound transmitter (16) and the oscillation receiver (18) are operative on the same discrete pane (10).

12. An apparatus according to claim 10 or 11, characterised in that the sound transmitter is a piezo sound transmitter (16).

13. An apparatus according to claim 12, characterised in that the frequency interval which can be tuned through extends from approximately $F_o = 2.5$ kHz to approximately $F_{max} = 26$ kHz and can be tuned through at approximately 800 Hz/sec.

14. An apparatus according to any of claims 10-13, characterised in that the sound transmitter (16) can be energized at the exciting frequency by way of a ramp generator (24) and a sinusoidal generator (26).

15. An apparatus according to any of claims 10-14, characterised in that at least one filter (32, 36) for removing interfering frequencies is connected after the oscillation receiver (18).

16. An apparatus according to claim 15, characterised in that a high-pass filter (32) and a low-pass filter (36) are connected after the oscillation receiver (18).

17. An apparatus according to claim 16 characterised in that a logarithmizer (34) is disposed between the high-pass filter (32) and the low-pass filter (36).

18. An apparatus according to any of claims 15-17, characterised in that a growth time discriminator is disposed after the or each filter (32, 36).


## Revendications

1. Procédé pour l'obtention de renseignements sur le gaz de remplissage de vitrages isolants, ou l'analogue comprenant au moins deux plaques ou vitres séparées et un espace intermédiaire entre plaques rempli de gaz, dans lequel on détermine la concentration d'au moins un gaz lourd, ou analogue, dans l'espace intermédiaire entre plaques par mesure et exploitation de la vitesse de propagation d'une grandeur de signal imprimée sur l'une des plaques dans l'espace entre plaques et dont on déduit par calcul la concentration de gaz, cherchée, caractérisé par le fait que, comme grandeur de signal, on utilise un signal sonore et que la vitesse du son est déterminée à partir de l'épaisseur entre plaques et de la fréquence de résonance moyenne d'ondes stationnaires se formant, dans l'espace entre-plaques, par modification, ou balayage, d'un intervalle de fréquence.

2. Procédé selon la revendication 1, caractérisé par le.fait que l'on utilise un intervalle de fréquence d'environ $F_o = 2,5$ kHz à environ $F_{max}$ 26 kHz, le balayage s'effectuant à environ 800 Hz/s.

3. Procédé selon l'une des revendications, caractérisé par le fait que l'application du signal sonore et l'enregistrement des vibrations s'opèrent sur une seule et même plaque.

4. Procédé selon l'une des revendications précédentes caractérisé par le fait qu'au moyen d'un capteur de vibrations sont déterminées, sur la fréquence balayée, les amplitudes de pression des vibrations de la plaque frappée par le signal sonore en un point situé à une distance du capteur de vibrations ; que sont discriminées les fréquences de résonance à mesurer des fréquences propres de flexion, par exploitation du temps de montée de niveau sur la fréquence d'excitation balayée, ainsi que la hauteur du niveau, et que, après détermination du temps de passage pour le balayage, des fréquences de résonance particulières sont déterminées et de là, par formation de la moyenne sur la fréquence, on détermine une fréquence de résonance moyenne pour le calcul de la vitesse du son.

5. Procédé selon la revendication 4, caractérisé par le fait que, pour calculer la vitesse du son, on tient compte des harmoniques tombant dans l'intervalle de fréquence balayé.

6. Procédé selon la revendication 4 ou 5, caractérisé par le fait qu'on filtre, pour les éliminer, les vibrations parasites ainsi que les fréquences propres de flexion des plaques.

7. Procédé selon l'une des revendications précédentes, caractérisé par le fait qu'on mesure l'épaisseur de l'espace entre plaques au voisinage de la zone d'introduction du signal sonore et on utilise la valeur ainsi obtenue pour la détermination de la vitesse du son.

8. Procédé selon la revendication 7, caractérisé par le fait qu'on mesure l'épaisseur des plaques au voisinage de la zone d'introduction du signal sonore.

9. Procédé selon la revendication 8, caractérisé par le fait qu'à l'aide des valeurs mesurées par l'épaisseur de l'espace entre plaques ainsi que des plaques, en partant d'une concentration nominale de gaz lourd mise en mémoire, on opère une comparaison entre valeur nominale et valeur réelle, relatives à la concentration de gaz.

10. Dispositif pour l'obtention de renseignements sur le gaz de remplissage de vitrages isolants ou l'analogue, comprenant au moins deux plaques, ou vitres, séparées et un espace intermédiaire entre plaques rempli de gaz, comportant un émetteur imprimant une grandeur de signal sur une des plaques du vitrage, un récepteur permettant la mesure de la vitesse de propagation de la grandeur de signal dans l'espace entre plaques et un calculateur pour déterminer la concentration de gaz à partir de l'épaisseur de l'espace entre plaques et de la vitesse de propagation déterminée, en particulier pour la mise en œuvre du procédé selon l'une des revendications précédentes, caractérisé par le fait que l'émetteur est un émetteur sonore (16), que le récepteur est un capteur de vibrations (18) appliqué à une certaine distance de l'émetteur sonore (16) ; que l'émetteur sonore (16) est réglé pour balayer un intervalle de fréquence pour la création d'ondes stationnaires dans l'espace entre plaques (14) ; et qu'il est prévu un calculateur (20) pour déterminer une fréquence de résonance moyenne à partir des fréquences de résonance particulières mesurées.

11. Dispositif selon la revendication 10, caractérisé par le fait que l'émetteur sonore (16) et le capteur de vibrations (18) sont montés sur la même plaque (10).

12. Dispositif selon la revendication 10 ou 11, caractérisé par le fait que l'émetteur sonore est un émetteur piézoélectrique (16).

13. Dispositif selon la revendication 12, caractérisé par le fait que l'intervalle de fréquence modifiable s'étend de environ $F_o = 2,5$ kHz à environ $F_{max} = 26$ kHz et est modifiable à raison d'environ 800 Hz/s.

14. Dispositif selon l'une des revendications 10 à 13, caractérisé par le fait que l'émetteur sonore (16) est attaquable à la fréquence d'excitation par un générateur de rampe (24) et un générateur de sinus (26).

15. Dispositif selon l'une des revendications 10 à 14, caractérisé par le fait qu'à la suite du capteur de vibrations (18) est monté au moins un filtre (32, 36) pour l'élimination des fréquences parasites.

16. Dispositif selon la revendication 15, caractérisé par le fait qu'à la suite du capteur de vibrations (18) sont montés un filtre passe-haut (32) ainsi qu'un filtre passe-bas (36).

17. Dispositif selon la revendication 16, caractérisé par le fait qu'entre le filtre passe-haut (32) et le filtre passe-bas (36) est monté un calculateur de logarithme (34).

18. Dispositif selon l'une des revendications 15 à 17, caractérisé par le fait qu'à la suite du filtre ou des filtres (32, 36), est monté un discriminateur de temps de montée.